# FASCICULE DE BREVET EUROPEEN

(11) **EP 0 421 895 B1**
(45) Date de publication et mention de la délivrance du brevet: **23.08.1995**
(21) Numéro de dépôt: 90420419.5
(22) Date de dépôt: 26.09.1990
(51) Int. Cl.: C07F 7/22, C08F 4/42

(54) **Composés d'étain (IV) éventuellement chélatés utilisables notamment comme catalyseurs latents**
Zinnverbindungen, gegebenenfalls cheliert, verwendbar als latente Katalysatoren
Tin compounds, optionally chelated, useful as latent catalysts

(30) Priorité: 02.10.1989 FR 8913057
(43) Date de publication de la demande: 10.04.1991
(73) Titulaire: RHONE-POULENC CHIMIE, 92408 Courbevoie Cédex (FR)
(72) Inventeur: Frances, Jean-Marc, F-69100 Villeurbanne (FR); Guillou,Véronique, F-75019 Paris (FR); Jousseaume, Bernard, F-33400 Talence (FR); Pereyre, Michel, F-33400 Talence (FR)
(74) Mandataire: Trolliet, Maurice

(56) Documents cités:
- EP-A- 0 232 541
- EP-A- 0 298 877
- EP-A- 0 300 928
- EP-A- 0 338 947
- EP-A- 0 343 086
- US-A- 4 427 695
- CHEMICAL ABSTRACTS, vol. 88, 1978, page 133, résumé no. 70106e, Columbus, Ohio,US; W.N. ALDRIDGE et al.: "Action on mitochondria and toxicity of metabolitesof tri-n-butyltin derivatives", & BIOCHEM. PHARMACOL. 1977, 26(21),1997-2000
- JOURNAL OF ORGANOMETALLIC CHEMISTRY, vol. 118, no. 1, 28 septembre 1976, pages41-54; R.H. FISH et al.: "Bioorganotin chemistry: reactions of tributyltinderivatives with a cytochrome P-450 dependent monooxygenase enzyme system"

## Description

La présente invention concerne des composés d'étain (IV) tétracoordinés ou pentacoordinés utilisables notamment comme catalyseurs latents.

On a déjà proposé de nombreux composés de l'étain utilisés comme catalyseurs en particulier pour :
- la synthèse de polyuréthanne : on peut par exemple citer les chélates d'étain (US-A-3 055 845) et les produits de réaction entre un carboxylate d'étain (IV) avec un sulfonylisocyanate (DE-A-3 326 566 et EP-A-232 541),
- la réticulation de polymères silicones par réaction de polycondensation : on peut par exemple citer les dicarboxylates de dialkylétain (NOLL "Chemistry and Technology of Silicones", page 337, Academic Press, 1968 - 2ème édition), et les bischélates de dialkylétain (EP-A-147 323 et US-A-4 517 337).

Des composés d'étain (IV) tétracoordinés utilisables comme catalyseurs latents ont fait l'objet des demandes de brevet français FR-A-2 630 444 et FR-A-2 630 450, déposées le 21 avril 1988 au nom de la Demanderesse.

La présente invention a pour but de proposer une nouvelle classe de composés d'étain (IV) tétracoordinés ou pentacoordinés qui soient d'une part inactifs à température ambiante (environ 20°C), notamment pour les deux applications indiquées ci-dessus et qui se transforment en espèces actives par élévation de température.

Ce type de composé est usuellement dénommé catalyseur latent.

Les catalyseurs latents selon l'invention répondent à la formule générale : 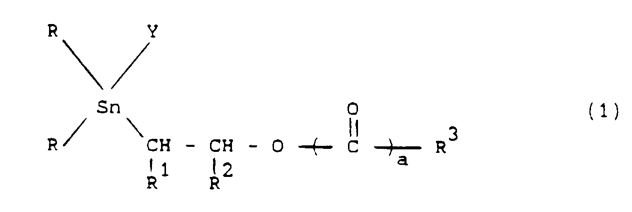
dans laquelle :
- les radicaux R, identiques ou différents, sont choisis parmi un radical alkyle linéaire ou ramifié en C₁-C₂₀, un radical aryle mononucléaire, arylalkyle et alkylaryle, dont la partie alkyle est en C₁-C₆,
- les radicaux R¹ et R², identiques ou différents, sont choisis parmi un atome d'hydrogène, un radical cyano, un radical alkyle en C₁-C₆, un radical alcoxycarbonyle dont la partie alkyle est en C₁-C₆, et R¹ et R² peuvent former ensemble un cycle hydrocarboné saturé ayant de 5 à 8 atomes de carbone,
- le radical R³ est choisi parmi un atome d'hydrogène, un radical alkyle en C₁-C₂₀ linéaire ou ramifié, un radical alcoxy en C₁-C₂₀ linéaire ou ramifié, un radical aryle mononucléaire et un radical aryloxy mononucléaire,
- a est 0 ou 1.
- le radical Y est choisi parmi un atome d'hydrogène, un atome d'halogène, un radical alcoxy linéaire ou ramifié en C₁-C₂₀, un radical acyloxy linéaire ou ramifié en C₁-C₂₀ et un groupe chélate de formule : 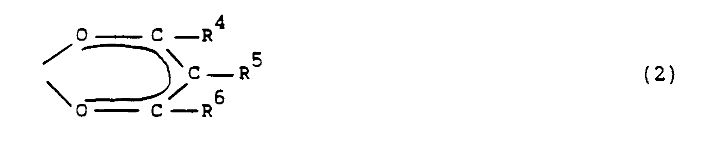 dans laquelle :
- les radicaux R⁴ et R⁶, identiques ou différents sont choisis çarmi un radical R et un radical alcoxy en C₁-C₅,
- le radical R⁵ est choisi parmi un atome d'hydrogène, un radical R⁴ ou bien R⁴ forme avec R⁵ un radical hydrocarboné cyclique divalent en C₅-C₁₂, sous réserve que si R³ = H, alors a = 1.

De préférence :
- R est choisi parmi les radicaux butyle, octyle, éthyl-2 hexyle et les deux radicaux R sont identiques,
- R¹ est H,
- R² est H,
- a = 1,
- R³ est choisi parmi les radicaux méthyle, éthyle, undécyle,
- Y est H, Cl, acétyloxy, lauroyloxy et acétylacétonate.

Les produits préférés répondant à la formule (1) sont les suivants :
- chlorure d'acétyloxy-2 éthyl dibutylétain :
   R = butyle, R¹ = R² = H, R³ = méthyle, Y = Cl, a = 1,
- chlorure de lauroyloxy-2 éthyl dibutylétain :
   R = butyle, R¹ = R² = H, R³ = undécyle, Y = Cl, a = 1,
- chlorure d'éthoxy-2 éthyl dibutylétain :
   R = butyle, R¹ = R² = H, R³ = éthyle, Y = Cl, a = 0,
- acétate d'acétyloxy-2 éthyl dibutylétain :
   R = butyle, R¹ = R² = H, R³ = méthyle, Y = acétoxyle, a = 1,
- laurate de lauroyloxy-2 éthyl dibutylétain :
   R = butyle, R¹ = R² = H, R³ = undécyle, Y = lauroyloxyle, a = 1,
- acétylacétonate d'acétyloxy-2 éthyl dibutylétain :
   R = butyle, R¹ = R² = H, R³ = méthyle, Y = acétylacétonate (pentène-2 one-4 oxy-2), a = 1,
- acétylacétonate de lauroyloxy-2 éthyl dibutylétain :
   R = butyle, R¹ = R² = H, R³ = undécyle, Y = acétyl acétonate (pentène-2 one-4 oxy-2), a = 1.
- hydrure d'acétyloxy-2 éthyl dibutylétain :
   R = butyle, R¹ = R² = Y = H, R³ = méthyle, a = 1
- hydrure de lauroyloxy-2 éthyl dibutylétain :
   R = butyle, R¹ = R² = Y = H, R³ = undécyle et a = 1,
Les composés de formule (1) où Y est H, peuvent être préparés par réaction d'addition de préférence d'un large excès molaire d'un dihydrure de diorganoétain de formule (3) : 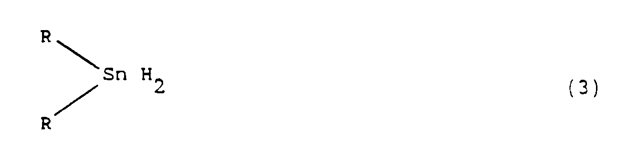
dans laquelle les radicaux R, identiques ou différents, ont la même signification qu'à la formule (1) ci-dessus sur un derivé analogue de formule (4) : 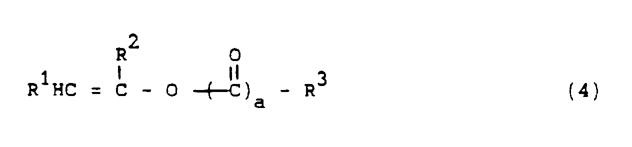
dans laquelle les radicaux R¹, R² et R³ et a ont la même signification qu'à la formule (1) ci-dessus.

On obtient ainsi les hydrures de formule (1) où Y est H en général en mélange avec au moins 20 % en poids du composé d'étain de formule 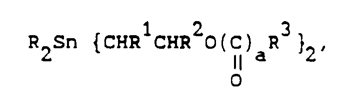
où R, R¹, R², R³ et a ont la même signification qu'à la formule (1).

Les dihydrures de formule (3) sont, pour la plupart, connus et décrits dans la littérature. Dans le cas où ce sont des produits nouveaux, ils peuvent être obtenus par réduction du dichlorure de diorganoétain correspondant par l'hydrure de lithium-aluminium.

Un autre procédé consiste à réduire l'oxyde de diorganoétain correspondant par un polydiorganosiloxane porteur de fonction SiH comme par exemple un polyhydrogénométhylsiloxane bloqué à chaque extrémité par un groupe triméthylsilyle.

Les carboxylates et alcoolates de formule (4) sont, pour la plupart connus et décrits dans la littérature.

Ainsi par exemple, les carboxylates de vinyle de formule : 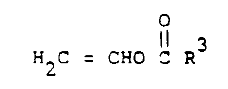
{formule (4) : R¹ = R² = H} sont obtenus par transestérification de l'acétate de vinyle sur l'acide R³COOH en milieu acide.

Les carboxylates d'énol de formule : 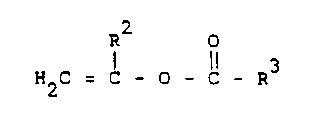
{formule (4) : R₁ = H, R₃ = CH₃} sont obtenus par réaction de la cétone H₃C - COR² sur l'acétate d'isopropényle en milieu acide.

La réaction d'hydrostannation d'un produit de formule (3) sur un produit de formule (4) est de préférence mise en oeuvre par réaction d'au moins trois moles de produit de formule (3) sur deux moles de produit de formule (4) à température ambiante au sein d'un solvant organique hydrocarboné tel que le cyclohexane anhydre. Le mélange réactionnel est soumis à un rayonnement U.V. (360 nm).

La réaction d'hydrostannation peut également être effectuée sans solvant en présence d'un générateur de radicaux libres comme par exemple en présence d'AIBN (azobisisobutyronitrile) à une température de 70-80 °C.

Les halogénures d'étain de formule (1) où Y est un atome d'halogène, de préférence le chlore, peuvent être préparés selon l'une des deux méthodes suivantes :
- la première méthode consiste à effectuer l'halogénation de l'hydrure correspondant de formule (1) où Y = H par un agent d'halogénation qui dans le cas où on effectue une chloration, est avantageusement le tétrachlorure de carbone, suivant la réaction : 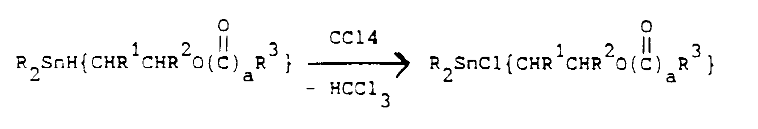
- la deuxième méthode consiste à effectuer la réaction d'addition de l'halogénohydrure de diorganoétain de formule : 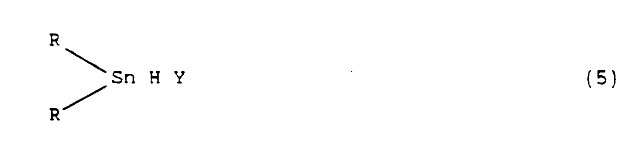 où Y représente un atome d'halogène et R a la même signification qu'à la formule (1), sur le dérivé énolique de formule (4).

On obtient ainsi quantitativement l'halogénure de formule (1). La réaction peut être mise en oeuvre a température ambiante en solution dans un solvant organique tel que le cyclohexane anhydre, sous un rayonnement U.V. (360 nm).

L'halogénohydrure de formule (5) est obtenu quantitativement par réaction d'un mélange équimolaire de dihydrure de formule (3) avec un dihalogénure de diorganoétain correspondant.

Les composés d'étain de formule (1) où Y est choisi parmi un radical alcoxy, acyloxy et chélate peuvent être obtenus par échange de l'atome d'halogène de l'halogénure d'étain de formule (1) correspondant par le groupe alcoxy, acyloxy ou chélate d'un sel organométallique de formule :

Y⁻ M⁺

où Y est un radical alcoxy, acyloxy ou chélate répondant à la définition donnée ci-avant a la formule (1) et M est un métal monovalent tel que Na⁺, K⁺, Li⁺, Ag⁺ ou un ammonium quaternaire.

La réaction qui est généralement quantitative est de préférence mise en oeuvre dans un solvant organique hydrocarboné tel que le toluène à température ambiante.

Les composés d'étain de formule (1), qui sont généralement des liquides à température ambiante, peuvent être identifiés par les techniques analytiques de spectroscopie I.R. (infra-rouge) et R.M.N. (résonance magnétique nucléaire ¹¹⁹Sn, ¹³C et ¹H) ainsi que par spectroscopie de masse et par la mesure de l'effet MOSSBAUER.

Il s'avère toutefois qu'en l'état actuel des connaissances des techniques analytiques, la méthode analytique R.M.N. ¹¹⁹Sn, telle que décrite, en particulier dans l'article de Peter J. SMITH "CHEMICAL SHIFTS OF OF ¹¹⁹Sn NUCLEI IN ORGANOTIN COMPOUNDS", page 291 et suivantes, publié dans ANNUAL REPORTS ON NMR SPECTROSCOPY, volume 8, 1978 ACADEMIC PRESS, est une méthode qui est à elle seule suffisamment précise pour caractériser les différents composés de l'étain présents au sein d'un mélange, en particulier d'un mélange réactionnel, et pour permettre de trouver les formules chimiques de la plupart de ces composés.

Le paramètre fondamental évalué par la R.M.N. ¹¹⁹Sn est la valeur du déplacement chimique exprimé en partie par millions relatif à une référence (généralement le tétraméthylétain).

La valeur du déplacement chimique δ est notamment sensible à l'électronégativité des groupements portés par l'étain et à la variation du nombre de coordinence de l'atome d'étain. Des travaux spécifiques de caractérisation de dérivés organostanniques à partir de la R.M.N. ¹¹⁹Sn sont notamment décrites par A.G. DAVIES et P.J. SMITH, COMPREHENSIVE ORGANO-METALLIC CHEMISTRY 11 TIN, pages 523 à 529 et par J. OTERA J. OF. ORGANOMET. CHEM. 221, pages 57-61 (1981).

Les composés de formule (1) sont stables à température ambiante et sont inactifs, à température ambiante (25 °C), comme catalyseurs de préparation de polyuréthannes et comme catalyseurs de durcissement de compositions organopolysiloxanes.

Par contre les composés de formule (1) sont utilisables comme catalyseurs de préparation de polyuréthannes et comme catalyseurs de durcissement de compositions organopolysiloxanes après décomposition thermique au sein des mélanges réactionnels à catalyser.

En effet les produits de formule (1) soumis à une élévation de température se décomposent thermiquement en composés catalytiquement actifs à savoir : 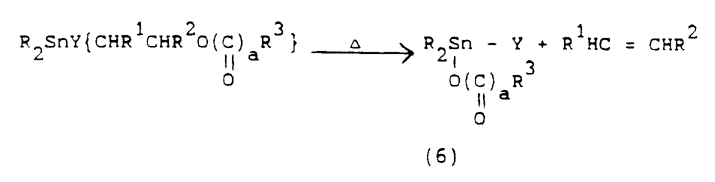
La décomposition thermique des composés de formule (1) intervient à une température spécifique à chacun des produits. Cette température est généralement comprise entre 40 et 250 °C.

Les composés de formule (6) ainsi libérés sont des catalyseurs actifs de préparation de polyuréthannes et/ou de durcissement de compositions polyorganosiloxanes.

L'avantage des catalyseurs latents de formule (1) est donc de pouvoir mélanger les produits de départ avec le catalyseur latent sans qu'il y ait catalyse de la réaction et de déclancher la catalyse de la réaction par chauffage du mélange à la température de décomposition du catalyseur latent.

Cette température de décomposition, généralement comprise entre 40 et 250 °C, peut être abaissée par addition d'une quantité efficace d'un agent nucléophile choisi par exemple, parmi l'eau, une amine organique secondaire, un alcool organique, un composé organosilicé à fonction silanol et un composé organique à fonction mercapto (SH). Par quantité efficace on entend de 0,001 mole à 10 moles ou plus d'agent nucléophile par mole de composé de formule (1).

La présente invention vise donc également un procédé de préparation de polyuréthanne selon lequel on mélange à température ambiante un polyisocyanate organique, un composé organique contenant au moins deux groupes à hydrogène actif et une quantité catalytiquement efficace d'un catalyseur latent de formule (1) et on porte le mélange au moins à la température de décomposition thermique du catalyseur latent.

Le catalyseur latent est de préférence utilisé à une teneur de 0,001 à 6 parties, de préférence de 0,01 à 1 partie en poids, calculées en poids d'étain métal pour 100 parties en poids des extraits secs des réactifs de départ.

Les polyisocyanates et les composés organiques contenant au moins deux groupes à hydrogène actif sont bien connus de l'homme de métier. Ils sont par exemple décrits dans US-A-3 055 845 et EP-A-232 541 cités comme référence.

La durée de "vie en pot" du mélange réactionnel est identique qu'il y ait ou qu'il n'y ait pas au sein dudit mélange un catalyseur latent de formule (1). Cette durée de "vie en pot" est au moins trois fois supérieure à celle que l'on observe sur un mélange réactionnel comportant une quantité équimolaire du catalyseur actif correspondant à celui obtenu par décomposition du catalyseur latent de formule (1).

La catalyse est déclenchée dès que l'on porte le mélange réactionnel à une température au moins égale à la température de décomposition du catalyseur latent. La réactivité observée est alors similaire à celle obtenue par l'utilisation d'une quantité équimolaire du catalyseur actif correspondant.

La présente invention vise donc également un procédé de réticulation de composition polyorganosiloxane selon lequel on mélange à température ambiante un polydiorganosiloxane (A) à extrémités silanol, un polyorganohydrogéno siloxane (B) et une quantité catalytiquement efficace d'un catalyseur latent (C) de formule (1) et on porte le mélange à une température égale ou supérieure à la température de décomposition thermique du catalyseur latent avec évaporation éventuelle du solvant ou de l'eau, présents dans le mélange.

Plus spécifiquement la composition polyorganosiloxane comporte :
A - 100 parties en poids d'un polydiorganosiloxane à extrémités silanol,
B - 0,1 à 25 parties en poids d'un polyorganohydrogénosiloxane ayant au moins 3 groupes SiH par molécule,
C - une quantité catalytiquement efficace d'un catalyseur latent de formule (1),
le rapport molaire SiH étant compris entre 0,6 et 10.

SiOH

Les radicaux organiques des polymères A et B sont, de préférence, choisis parmi les radicaux alkyle en C₁-C₆ et phényle, au moins 80 % en nombre étant des radicaux méthyle.

La température de décomposition du catalyseur est généralement comprise entre 30 et 200 °C. Elle dépend du catalyseur latent particulier utilisé et de la présentation de la composition polyorganosiloxane.

Cette température de décomposition peut être abaissée par addition d'une quantité efficace d'un agent nucléophile choisi, par exemple, parmi l'eau, une amine organique secondaire, un alcool organique, un composé organosilicié à fonction silanol et un composé organique à fonction mercapto (SH). Par quantité efficace d'agent nucléophile on entend de 0,001 à 10 moles et plus d'agent nucléophile par mole de composé à l'étain de formule (1).

Ainsi pour les compositions polyorganosiloxanes sans solvant et en solution dans un solvant organique cette température de décomposition est voisine de la température de décomposition intrinsèque spécifique du catalyseur latent. Pour ces deux types de compositions il est souvent possible de conditionner les compositions en un seul emballage avec une durée de stabilité au stockage pouvant être supérieure à 6 mois.

Par contre pour les compositions en émulsion aqueuse, cette température de décomposition peut être abaissée dans certains cas jusqu'à la température ambiante. Il est alors généralement souhaitable de conditionner l'émulsion en au moins deux emballages pour le stockage. Dans ce cas, la durée de "vie en pot" de la composition est sensiblement améliorée par rapport à celle des compositions comportant un catalyseur à l'étain connu. Cette durée de "vie en pot" est par exemple trois fois supérieure à celle observée sur une composition sans solvant comportant une quantité équimolaire de diacétylacétonate de dibutylétain.

Par quantité efficace de catalyseur latent on entend généralement selon l'invention, une teneur de 0,001 à 6 parties, de préférence de 0,01 à 3 parties (calculées en poids d'étain métal), de catalyseur latent de formule (1) pour 100 parties en poids d'extraits secs de la somme des polymères (A) et (B).

Les compositions de revêtement selon l'invention ne comportent pas généralement de charges minérales. Toutefois la présence de charges, de préférence siliceuses (silice de précipitation, silice de combustion, terres de diatomées, quartz broyé, etc .....), utilisées généralement dans les compositions élastomères de silicone n'est pas exclue à la teneur de 1 a 50 parties de charge pour 100 parties de polymère (A) en particulier pour réaliser des revêtements minces de quelques »m à plusieurs mm d'épaisseur.

Les polymères (A) et (B) sont connus depuis longtemps.

Les polymères (A) peuvent être choisis parmi les polydiméthylsiloxanes a groupes hydroxyle terminaux (à extrémités silanol), de viscosité d'au moins 10 mPa.s à 25 °C. Ces polymères (A) comprennent les huiles peu visqueuses allant par exemple de 10 mPa.s à 5 000 mPa.s, les huiles visqueuses de 5 000 à 10⁶ mPa.s et les gommes de viscosité supérieure à 10⁶ mPa.s.

Les polymères (B) peuvent être linéaires, cycliques ou ramifiés.

La viscosité des polymères (B) s'étale de 2 mPa.s a 25 °C à 10 000 mPa.s à 25 °C.

Dans le cas où la composition est utilisée sans solvant, la viscosité des polymères (A) et (B) est choisie de telle sorte que la viscosité du mélange, c'est-à-dire de la composition, soit comprise entre 40 et 5 000 mPa.s, de préférence entre 100 et 3 000 mPa.s à 25 °C.

Les compositions selon l'invention peuvent être émulsionnées, dispersées ou diluées dans l'eau ou mises en solution dans un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, les dérivés du monoéthyléneglycol et de méthylèneglycol.

De préférence, l'eau ou le solvant forme au moment de l'emploi de 50 à 99 % en poids de la dispersion ou de la solution.

Lors du traitement de réticulation impliquant l'évaporation de l'eau ou du solvant, la composition durcit et elle est donc utile comme composition de revêtement pour des supports souples en métal, papier, matière plastique, carton, etc .....

Les compositions selon l'invention sont également utilisables comme compositions pour rendre un matériau non adhérent, tel que des feuilles métalliques, du verre, des matières plastiques ou du papier, à d'autres matériaux auxquels il adhérerait normalement.

Dans les exemples tous les produits analysés par RMN sont dilués dans du benzène deutéré sauf indication contraire. Les déplacements chimiques sont indiqués en ppm.

### - EXEMPLE 1 :

### Préparation et décomposition du chlorure d'acétoxy-2 éthyl dibutylétain :

a) - Préparation : une solution stoechiométrique d'hydrure de chlorodibutylétain et d'acétate de vinyle dans du cyclohexane anhydre est exposée sous azote pendant 1 heure aux U.V., à 30 °C. En fin de réaction le solvant est éliminé sous vide, à température ambiante.
   Caractéristiques spectrales :
   RMN ¹H (pur) δ : 4,2(2H,t) ; 1,7(3H,s) ; 1,6 - 0,9 (20H,m) ;
   |³J(¹¹⁷Sn¹H)| = 81 Hz ; |³J(¹¹⁹Sn¹H)| = 85 Hz
   RMN ¹¹⁹Sn δ : 74,6
b) - Décomposition : au bout de 1 heure 15 minutes à 90 °C, le produit est décomposé en acétate de chlorodibutylétain.
   Caractéristiques spectrales :
   RMN ¹H δ : 2,0 - 0,8 (m)
   RMN ¹¹⁹Sn δ : -28 (large)

### - EXEMPLE 2 :

### Préparation et décomposition du chlorure de lauroyloxy-2 éthyl dibutylétain :

a) - Préparation : on répète le mode opératoire de l'exemple 1 sauf que l'exposition dure 2 heures et que l'acétate de vinyle est remplacé par du laurate de vinyle.
   Caractéristiques spectrales :
   RMN ¹H (pur) δ : 4,15 (2H,t) ; 2,2 - 0,9 (43H,m) ;
   |³J(¹¹⁷Sn¹H)| = 81 Hz et |³J(¹¹⁹Sn¹H)| = 85 Hz
b) - Décomposition : au bout de 2 heures à 90 °C, le produit est décomposé totalement en laurate de chlorodibutylétain.
   Caractéristiques spectrales :
   RMN ¹H δ : 2,2 (2H,t) ; 1,7 - 0,8 (39H,m)
   RMN ¹¹⁹Sn δ : -29 (large)

### - EXEMPLE 3 :

### Préparation et décomposition du chlorure d'éthoxy-2 éthyl dibutylétain :

a) - Préparation : on répète le mode opératoire de l'exemple 1 sauf que l'exposition dure 3 heures à 5 °C et que l'acétate de vinyle est remplacé par de l'éther de vinyle et d'éthyle.
   Caractéristiques spectrales :
   RMN ¹H δ : 3,5 - 2,9 (4H,m) ; 1,8 - 0,8 (23H,m)
   |³J(SnH)| = 66 Hz
   RMN ¹¹⁹Sn δ : 103,6
b) - Décomposition : au bout de 1 heure 20 minutes à 150 °C, le produit est totalement décomposé en éthoxychlorodibutylétain.
   Caractéristiques spectrales :
   RMN ¹H δ : 3,9 (2H,q) ; 1,8 - 0,9 (21H,m)
   RMN ¹¹⁹Sn δ : -113,0

### - EXEMPLE 4 :

### Préparation et décomposition de l'acétate d'acétoxy-2 éthyl dibutylétain :

a) - Préparation : à une solution de chlorure d'acétoxy-2 éthyl dibutylétain dans du toluène anhydre est ajouté un large excès d'acétate d'argent. Le milieu est agité 15 minutes à température ambiante, puis filtré. Le solvant est ensuite éliminé sous vide.
   Caractéristiques spectrales :
   RMN ¹H (pur) δ : 4,4 (2H,m) ; 2,0 (3H,s) ; 1,95 (3H,s) ; 1,6 - 0,9 (20H,m)
   |³J(SnH)| = 77 Hz ;
b) - Décomposition : au bout de 1 heure à 75 °C, le produit est décomposé totalement en diacétate de dibutylétain.
   Caractéristiques spectrales :
   RMN ¹H δ : 2,0 (6H,s) ; 1,65 - 0,9 (18H,m)
   RMN ¹¹⁹Sn δ : -156,3
   IA ν(CO) : 1 605, 1 570, 1 425 cm⁻¹ (F)

### - EXEMPLE 5 :

### Préparation et décomposition du laurate de lauroyloxy-2 éthyl dibutylétain :

a) - Préparation : on répète le même mode opératoire qu'à l'exemple 4 sauf que le chlorure de départ est du chlorure de lauroyloxy-2 éthyl dibutylétain. L'échange est réalisé a l'aide de laurate de potassium.
   Caractéristiques spectrales :
   RMN ¹H δ : 4,4(2H,m) ; 2,0 - 0,9 (66H,m) ;
   RMN ¹¹⁹Sn δ : 35,9
b) - Décomposition : au bout de 2 heures à 75 °C, le produit a totalement disparu pour conduire au dilaurate de dibutylétain.
   Caractéristiques spectrales :
   RMN ¹H δ : 2,2 (4H,t) ; 1,6 - 0,9 (60H,m)
   RMN ¹¹⁹Sn δ : -152,5

### - EXEMPLE 6 :

### Préparation et décomposition de l'acétylacétonate d'acétoxy-2 éthyl dibutylétain :

a) - Préparation : on répète le mode opératoire de l'exemple 4 sauf que l'échange est réalisé avec de l'acétylacétonate de potassium.
   Caractéristiques spectrales :
   RMN ¹H δ : 5,3 (1H,s) ; 4,4 (2H,m) ; 2,0 (3H,s) ; 1,8 (6H,s) ; 1,7 - 0,9 (20H,m)
   |³J(¹¹⁷Sn¹H)| = 68 Hz
   RMN ¹¹⁹Sn δ : 38,8
b) - Décomposition : au bout de 1 heure à 120 °C, le produit est décomposé totalement en mélange de diacétylacétonate de dibutylétain, de diacétate de dibutylétain et d'acétylacétonate acétate de dibutylétain.
   Caractéristiques spectrales :
   RMN ¹¹⁹Sn δ : -260 (large) ; -155 (diacétate de dibutylétain) -400 (très large, diacétylacétonate de dibutylétain).

### - EXEMPLE 7 :

### Préparation et décomposition de l'acétylacétonate de lauroyloxy-2 éthyl dibutylétain :

a) - Préparation : on répète le mode opératoire de l'exemple 5 sauf que l'échange est réalisé avec de l'acétylacétonate de potassium.
   Caractéristiques spectrales :
   RMN ¹H δ : 5,35 (1H,s) ; 4,4 (2H,m) ; 2,20 (2H,t) ; 1,85 (6H,s) ; 1,5 - 0,9 (41H,m)
   RMN ¹¹⁹Sn δ : 39,6
b) - Décomposition : au bout de 3 heures à 120 °C, le produit a totalement disparu pour conduire à un mélange du même type que celui obtenu à l'exemple 6.
   Caractéristiques spectrales :
   RMN ¹¹⁹Sn δ : -263 (large) ; -151,4 (dilaurate de dibutylétain) -400 (très large, diacétylacètonate de dibutylétain).

### - EXEMPLE 8 :

### Préparation et décomposition de l'hydrure d'acétoxy-2 éthyl dibutylétain :

a) - Préparation : une solution de 11,6 mmole d'acétate de vinyle, 6,3 g (26,8 mmoles) de dihydrure de dibutylétain et 1,8 g de cyclohexane anhydre, placée sous azote dans une cuve en pyrex thermostatée à 20 °C, est exposée aux U.V. pendant deux heures. L'excès de dihydrure stannique et le solvant sont éliminés sous un vide poussé (10⁻⁵ KPa), à température ambiante. Les analyses du produit montrent que l'hydrure (1) est obtenu en mélange avec 20 à 30 % de Bu₂Sn(CH₂CH₂OCOCH₃)₂.
   Caractéristiques spectrales :
   RMN ¹H (pur) δ : 5,0 (1H,m) ; 4,3 (2H,m) ; 1,8(3H,s) ; 1,5 - 0,9 (20H,m) ; |³J(SnH)| = 38 Hz ;
   RMN ¹¹⁹Sn δ : -100,0
   IR (film) : v(SnH) = 1840 cm⁻¹ (F)
b) - Décomposition : au bout de 3 heures à 110 °C, l'hydrure est décomposé totalement en catalyseur actif.

### - EXEMPLE 9 :

### Préparation et décomposition de l'hydrure de lauroyloxy-2 éthyl dibutylétain :

a) - Préparation : on répète le mode opératoire de l'exemple 8 sauf que l'acétate de vinyle est remplacé par du laurate de vinyle.
   Caractéristiques spectrales :
   RMN ¹H (pur) δ : 5,0 (1H,m) ; 4,4 (2H,m) ; 2,3(2H,t) ; 1,6 - 0,9 (41H,m) ;
   |³J(SnH)| = 39 Hz ;
   RMN ¹¹⁹Sn δ : -99,50
b) - Décomposition : au bout de 4 heures à 110 °C, l'hydrure est décomposé totalement en catalyseur actif.

### - EXEMPLE 10 :

### Utilisation de catalyseur latent pour la préparation de polyuréthannes :

Préparation d'une masse réactionnelle : par mélange d'un diol, d'un diisocyanate et d'un composé organostannique.

Réactifs :
- le diol utilisé est un mélange de butanediol-1,4 et de polyéther de masse moléculaire 1 000 dont chaque extrémité de chaîne posséde une fonction OH,
- le diisocyanate utilisé est l'IPDI : isocyanato méthyl-3 triméthyl-3,5,5 cyclohexylisocyanate de formule : 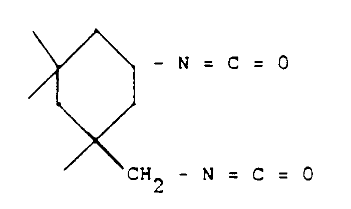
- le composé organostannique est utilisé à raison de 0,03 partie de composé pour 100 parties en masse (d'extraits secs) du diol et de l'IPDI.

Mode opératoire : dans une fiole à vide on introduit :
- 5,26 g de polyéther,
- 0,8 g de butanediol-1,4
Le mélange est dégazé et on introduit 1 ml d'une solution à 0,63 mmol de composé organostannique dans 25 ml d'éther anhydre.

Le solvant est évaporé sous vide et on ajoute 3,94 g d'IPDI.

Le mélange réactionnel final est dégazé en 2 minutes.

Deux mélanges réactionnels sont réalisés : l'un avec le catalyseur latent l'acétylacétonate de lauroyloxy-2 éthyl dibutylétain dénommé C₁, l'autre avec un catalyseur connu, dénommé C₂ à savoir le diacétylacétonate de dibutylétain. Un troisième mélange est réalisé sans catalyseur. Chaque mélange est divisé en deux lots. Sur un premier lot on mesure le temps de gélification (durée de "vie en pot") à température ambiante (27 °C) et sur le deuxième on mesure le temps nécessaire à la prise en gel à 140 °C.

Les résultats sont rassemblés dans le tableau 1 ci-après.

**TABLEAU 1**

| "Sn" | SANS CATALYSEUR | CATALYSEUR C1 | CATALYSEUR C2 |
|---|---|---|---|
| Durée de "vie en pot" à 27 °C | 6 heures | 2 heures | 40 minutes |
| Temps de prise en gel à 140 °C | 21 minutes | 5 minutes | 4 minutes 30 s |

Du tableau 1, on constate que la durée de "vie en pot" à température ambiante du mélange contenant le catalyseur latent est trois fois plus longue que celle du mélange contenant le catalyseur. A 140 °C, le catalyseur latent retrouve toute son activité très rapidement puisqu'il ne faut pas plus de temps à cette préparation pour gélifier qu'à celle contenant le catalyseur.

### - EXEMPLE 11 :

### Utilisation de catalyseur latent pour la réticulation de composition organopolysiloxane :

On homogénéise à l'air ambiant le mélange suivant :
- 23 g d'huile α,ω-dihydroxypolydiméthylsiloxane, de viscosité 5 000 mPa.s,
- 1 g d'une huile polyhydrogénométhylsiloxane à terminaisons triméthylsilyle, de viscosité 20 mPa.s,
- rapport molaire SiH/SiOH = 9,
- 0,178 millimole de composé organostannique.

Un premier mélange comporte, comme composé organostannique de l'acétylacétonate de lauroyloxy-2 éthyl dibutylétain, dénommé C₁.

Un deuxième mélange comporte comme composé organostannique du diacétylacétonate de dibutylétain, dénommé C₂.

Chacun de ces deux mélanges est divisé en deux lots.

Sur les deux premiers lots on détermine la stabilité des mélanges à l'air ambiant en mesurant le temps nécessaire à chacun des mélanges pour atteindre 150 000 mPa.s à 29 °C. On utilise pour cela un rhéomètre CARRI-MED® sur lequel est adapté un système cône/plaque thermostaté à 29 °C.

Sur les deux deuxièmes lots on mesure le temps de réticulation à 150 °C pour une composition ayant une épaisseur de 10 mm.

Les résultats obtenus sont rassemblés dans le tableau 2 ci-après.

**TABLEAU 2**

| | CATALYSEUR C1 | CATALYSEUR C2 |
|---|---|---|
| Durée de "vie en pot" à 29 °C | 2 heures 30 | 50 minutes |
| Temps de réticulation à 150 °C | 10 minutes | 10 minutes |

Du tableau 2, on constate que la durée de "vie en pot" à l'air ambiant est avec C₁ près de 3 fois plus longue qu'avec C₂, pour un temps de réticulation à 150 °C analogue.

## Revendications

1. Composés d'étain (IV) tétracoordinés ou pentacoordinés de formule générale : 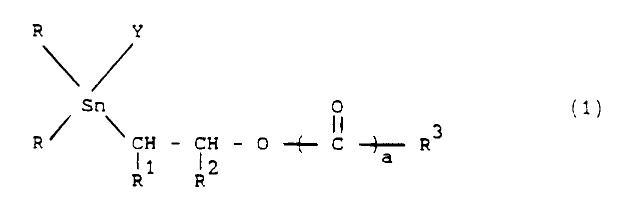 dans laquelle :
- les radicaux R, identiques ou différents, sont choisis parmi un radical alkyle linéaire ou ramifié en C₁-C₂₀, un radical aryle mononucléaire, arylalkyle et alkylaryle, dont la partie alkyle est en C₁-C₆,
- les radicaux R¹ et R², identiques ou différents, sont choisis parmi un atome d'hydrogène, un radical cyano, un radical alkyle en C₁-C₆, un radical alcoxycarbonyle dont la partie alkyle est en C₁-C₆, et R¹ et R² peuvent former ensemble un cycle hydrocarboné saturé ayant de 5 à 8 atomes de carbone,
- le radical R³ est choisi parmi un atome d'hydrogène, un radical alkyle en C₁-C₂₀ linéaire ou ramifié, un radical alcoxy en C₁-C₂₀ linéaire ou ramifié, un radical aryle mononucléaire et un radical aryloxy mononucléaire,
- a est 0 ou 1.
- le radical Y est choisi parmi un atome d'hydrogène, un atome d'halogène, un radical alcoxy linéaire ou ramifié en C₁-C₂₀, un radical acyloxy linéaire ou ramifié en C₁-C₂₀ et un groupe chélate de formule : 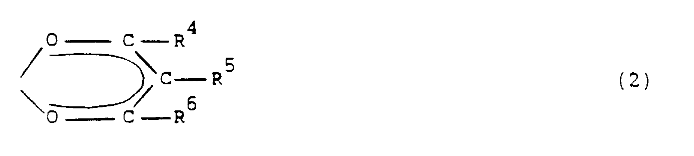 dans laquelle :
- les radicaux R⁴ et R⁶, identiques ou différents sont choisis parmi un radical R et un radical alcoxy en C₁-C₅,
- le radical R⁵ est choisi parmi un atome d'hydrogène, un radical R⁴ ou bien R⁴ forme avec R⁵ un radical hydrocarboné cyclique divalent en C₅-C₁₂, sous réserve que si R³ = H, alors a = 1

2. Composés d'étain (IV) selon la revendication1, caractérisés en ce que
- R est choisi parmi les radicaux butyle, octyle, éthyl-2 hexyle et les deux radicaux R sont identiques,
- R¹ est H,
- R² est H,
- a = 1,
- R³ est choisi parmi les radicaux méthyle, éthyle, undécyle,
- Y est H, Cl acétyloxy, lauroyloxy et acétylacétonate.

3. Composés d'étain (IV) selon la revendication 1, choisis parmi :
- chlorure d'acétyloxy-2 éthyl dibutylétain :
R = butyle, R¹ = R² = H, R³ = méthyle, Y = Cl, a = 1,
- chlorure de lauroyloxy-2 éthyl dibutylétain :
R = butyle, R¹ = R² = H, R³ = undécyle, Y = Cl, a = 1,
- chlorure d'éthoxy-2 éthyl dibutylétain :
R = butyle, R¹ = R² = H, R³ = éthyle, Y = Cl, a = 0,
- acétate d'acétyloxy-2 éthyl dibutylétain :
R = butyle, R¹ = R² = H, R³ = méthyle, Y = acétoxyle, a = 1,
- laurate de lauroyloxy-2 éthyl dibutylétain :
R = butyle, R¹ = R² = H, R³ = undécyle, Y = lauroyloxyle, a = 1,
- acétylacétonate d'acétyloxy-2 éthyl dibutylétain :
R = butyle, R¹ = R² = H, R³ = méthyle, Y = acétylacétonate (pentène-2 one-4 oxy-2), a = 1,
- acétylacétonate de lauroyloxy-2 éthyl dibutylétain :
R = butyle, R¹ = R² = H, R³ = undécyle, Y = acétyl acétonate (pentène-2 one-4 oxy-2), a = 1.
- hydrure d'acétyloxy-2 éthyl dibutylétain :
R = butyle, R¹ = R² = Y = H, R³ = méthyle, a = 1
- hydrure de lauroyloxy-2 éthyl dibutylétain :
R = butyle, R¹ = R² = Y = H, R³ = undécyle et a = 1,

4. Procédé de décomposition thermique d'un composé tel que défini à l'une quelconque des revendications 1 à 3, caractérisé en ce qu'on chauffe lesdits composés jusqu'à l'obtention du produit de formule : 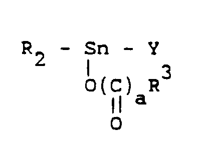 dans laquelle R, R³, Y et a ont la même signification qu'à la formule (1).

5. Procédé selon la revendication 4, caractérisé en ce qu'on ajoute une quantité efficace d'un agent nucléophile choisi parmi l'eau, une amine organique secondaire, un alcool organique, un composé organosilicié à fonction silanol et un composé organique à fonction mercapto (SH).

6. Utilisation d'un composé tel que défini à l'une quelconque des revendications 1 à 3 comme catalyseur de préparation de polyuréthanne par réaction d'un polyisocyanate organique sur un composé organique contenant au moins deux groupes à hydrogène actif et déclenchement de la catalyse de la réaction par chauffage du mélange réactionnel à une température au moins égale à la température de décomposition dudit composé.

7. Utilisation d'un composé tel que défini à l'une quelconque des revendications 1 à 3 comme catalyseur de réticulation d'un mélange d'un polydiorganosiloxane A à extrémités silanol et d'un polyorganohydrogénosiloxane B, en portant ledit mélange comportant une quantité efficace dudit composé à une température égale ou supérieure a la décomposition thermique dudit composé avec évaporation éventuelle du solvant ou de l'eau présents dans le mélange.

## Claims

1. Tetracoordinate or pentacoordinate tin(IV) compounds of general formula: 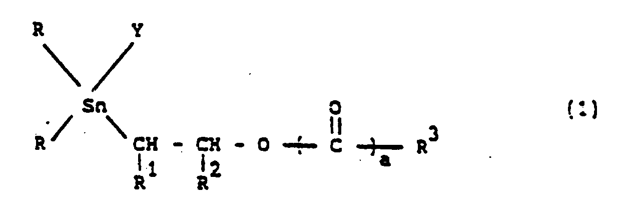 in which:
- the radicals R, which may be identical or different, are chosen from a linear or branched C₁-C₂₀ alkyl radical, a mononuclear aryl radical, an arylalkyl radical and an alkylaryl radical, in which the alkyl part is C₁-C₆,
- the radicals R¹ and R², which may be identical or different, are chosen from a hydrogen atom, a cyano radical, a C₁-C₆ alkyl radical, an alkoxycarbonyl radical in which the alkyl part is C₁-C₆, and R¹ and R² together may form a saturated hydrocarbon ring having from 5 to 8 carbon atoms,
- the radical R³ is chosen from a hydrogen atom, a linear or branched C₁-C₂₀ alkyl radical, a linear or branched C₁-C₂₀ alkoxy radical, a mononuclear aryl radical and a mononuclear aryloxy radical,
- a is 0 or 1,
- the radical Y is chosen from a hydrogen atom, a halogen atom, a linear or branched C₁-c₂₀ alkoxy radical, a linear or branched C₁-C₂₀ acyloxy radical and a chelate group of formula: 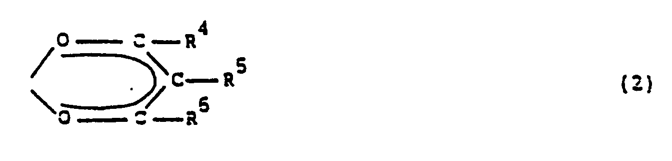 in which:
- the radicals R⁴ and R⁶, which may be identical or different, are chosen from a radical R and a C₁-C₅ alkoxy radical,
- the radical R⁵ is chosen from a hydrogen atom and a radical R⁴, or alternatively R⁴ forms with R⁵ a divalent cyclic C₅-C₁₂ hydrocarbon radical, with the proviso that if R³ = H, then a = 1.

2. Tin(IV) compounds according to claim 1, characterized in that
- R is chosen from the butyl, octyl and 2-ethylhexyl radicals and the two radicals R are identical,
- R¹ is H,
- R² is H,
- a = 1,
- R³ is chosen from the methyl, ethyl and undecyl radicals,
- Y is H, Cl, acetyloxy, lauroyloxy and acetylacetonate.

3. Tin(IV) compounds according to claim 1, chosen from:
- 2-acetyloxyethyldibutyltin chloride:
R = butyl, R¹ = R² = H, R³ = methyl, Y = Cl, a = 1,
- 2-lauroyloxyethyldibutyltin chloride:
R = butyl, R¹ = R² = H, R³ = undecyl, Y = Cl, a = 1,
- 2-ethoxyethyldibutyltin chloride:
R = butyl, R¹ = R² = H, R³ = ethyl, Y = Cl, a = 0,
- 2-acetyloxyethyldibutyltin acetate:
R = butyl, R¹ = R² = H, R³ = methyl, Y = acetyloxy, a = 1,
- 2-lauroyloxyethyldibutyltin laurate:
R = butyl, R¹ = R² = H, R³ = undecyl, Y = lauroyloxy, a = 1,
- 2-acetyloxyethyldibutyltin acetylacetonate:
R = butyl, R¹ = R² = H, R³ = methyl, Y = acetylacetonate (2-penten-4-one-2-oxy), a = 1,
- 2-lauroyloxyethyldibutyltin acetylacetonate:
R = butyl, R¹ = R² = H, R³ = undecyl, Y = acetylacetonate (2-penten-4-one-2-oxy), a = 1,
- 2-acetyloxyethyldibutyltin hydride:
R = butyl, R¹ = R²Y = H, R³ = methyl, a = 1,
- 2-lauroyloxyethyldibutyltin hydride:
R = butyl, R¹ = R² = Y = H, R³ = undecyl and a = 1.

4. Process for the thermal decomposition of a compound as defined in any one of claims 1 to 3, characterized in that the said compounds are heated until the product of the following formula is obtained: 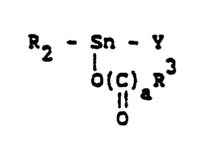 in which R, R³, Y and a have the same meaning as in formula (1).

5. Process according to claim 4, characterized in that an effective amount of a nucleophilic agent, chosen from water, a secondary organic amine, an organic alcohol, an organosilicon compound containing a silanol function and an organic compound containing a mercapto (SH) function, is added.

6. Use of a compound as defined in any of claims 1 to 3 as a catalyst for the preparation of polyurethane by reaction of an organic polyisocyanate with an organic compound containing at least two groups containing active hydrogen, and triggering of the catalysis for the reaction by heating the reaction mixture to a temperature at least equal to the decomposition temperature of the said compound.

7. Use of a compound as defined in any one of claims 1 to 3 as a crosslinking catalyst for a mixture of a polydiorganosiloxane A containing silanol terminals and a polyorganohydrogenosiloxane B, by bringing the said mixture containing an effective amount of the said compound to a temperature equal to or greater than that of the thermal decomposition of the said compound with possible evaporation of the solvent or of the water present in the mixture.

## Patentansprüche

1. Tetrakoordinierte oder pentakoordinierte Zinn(IV)-verbindungen der allgemeinen Formel (I) 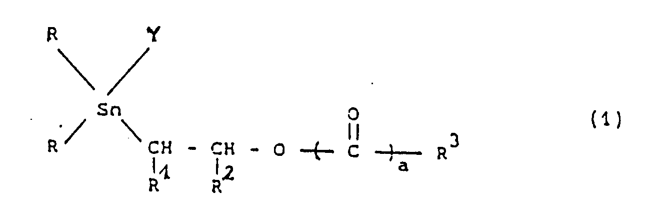 worin:
die Reste R, die identisch oder verschieden sind, ausgewählt sind unter einem linearen oder verzweigten C₁-C₂₀-Alkylrest, einem einkernigen Arylrest, Arylalkyl und Alkylaryl, dessen Alkylteil C₁-C₆ ist;
die Reste R¹ und R², die identisch oder verschieden sind, ausgewählt sind unter einem Wasserstoffatom, einem Cyanorest, einem C₁-C₆-Alkylrest, einem Alkoxycarbonylrest, dessen Alkylteil C₁-C₆ ist, und R¹ und R² können zusammen einen gesättigten Kohlenwasserstoffring mit 5 bis 8 Kohlenstoffatomen bilden;
der Rest R³ ausgewählt ist unter einem Wasserstoffatom, einem geraden oder verzweigten C₁-C₂₀-Alkylrest, einem geraden oder verzweigten C₁-C₂₀-Alkoxyrest, einem einkernigen Arylrest und einem einkernigen Aryloxyrest;
a = 0 oder 1 ist;
der Rest Y ausgewählt ist unter einem Wasserstoffatom, einem Halogenatom, einem linearen oder verzweigten C₁-C₂₀-Alkoxyrest, einem linearen oder verzweigten C₁-C₂₀-Acyloxyrest und einer Chelatgruppe der Formel 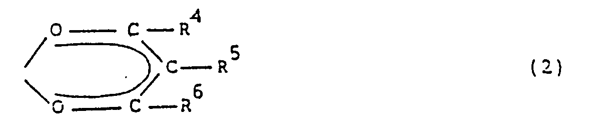 worin:
die Reste R⁴ und R⁶, die identisch oder verschieden sind, ausgewählt sind unter einem Rest R und einem C₁-C₅-Alkoxyrest;
der Rest R⁵ ist ausgewählt unter einem Wasserstoffatom, einem Rest R⁴ oder R⁴ bildet auch mit R⁵ einen zweiwertigen cyclischen C₅-C₁₂-Kohlenwasserstoffrest, mit der Maßgabe, daß falls R³ = H ist, dann a = 1 ist.

2. Zinn(IV)-verbindungen gemäß Anspruch 1, dadurch gekennzeichnet, daß
R ausgewählt ist unter den Resten Butyl, Octyl, 2-Ethylhexyl und die beiden Reste R identisch sind;
R¹ ist H;
R² ist H;
a = 1;
R³ ist ausgewählt unter den Resten Methyl, Ethyl, Undecyl,
Y ist H, Cl, Acetyloxy, Lauroyloxy und Acetylacetonat.

3. Zinn(IV)-verbindungen gemäß Anspruch 1, ausgewählt unter:
2-Acetyloxyethyl-dibutylzinnchlorid:
R = Butyl, R¹ = R² = H, R³ = Methyl, Y = Cl, a = 1;
2-Lauroyloxyethyl-dibutylzinnchlorid:
R = Butyl, R¹ = R² = H, R³ = Undecyl, Y = Cl, a = 1;
2-Ethoxyethyl-dibutylzinnchlorid:
R = Butyl, R¹ = R² = H, R³ = Ethyl, Y = Cl, a = 0;
2-Acetyloxyethyl-dibutylzinnacetat;
R = Butyl, R¹ = R² = H, R³ = Methyl, Y = Acetoxyl, a = 1;
2-Lauroyloxyethyl-dibutylzinnlaurat:
R = Butyl, R¹ = R² = H, R³ = Undecyl, Y = Lauroyloxyl, a = 1;
2-Acetyloxyethyl-dibutylzinnacetylacetonat:
R = Butyl, R¹ = R² = H, R³ = Methyl, Y = Acetylacetonat (2-Oxypent-2-en-4-on), a = 1;
2-Lauroyloxyethyl-dibutylzinnacetylacetonat:
R = Butyl, R¹ = R² = H, R³ = Undecyl, Y = Acetylacetonat (2-Oxypent-2-en-4-on), a = 1;
2-Acetyloxyethyl-dibutylzinnhydrid:
R = Butyl, R¹ = R² = Y = H, R³ = Methyl, a = 1
2-Lauroyloxyethyl-dibutylzinnhydrid:
R = Butyl, R¹ = R² = Y = H, R³ = Undecyl, und a = 1.

4. Verfahren zur thermischen Zersetzung einer Verbindung, wie in einem der Ansprüche 1 bis 3 definiert, dadurch gekennzeichnet, daß man diese Verbindungen bis zur Erzielung des Produkts der Formel 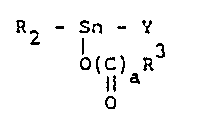 erhitzt, worin R, R³, Y und a die gleiche Bedeutung wie in Formel (1) haben.

5. Verfahren gemäß Anspruch 4, dadurch gekennzeichnet, daß man eine wirksame Menge eines nukleophilen Mittels, ausgewählt unter Wasser, einem sekundären organischen Amin, einem organischen Alkohol, einer Organosiliziumverbindung mit Silanolfunktion, und einer organischen Verbindung mit Mercaptofunktion (SH) zufügt.

6. Verwendung einer Verbindung, wie in einem der Ansprüche 1 bis 3 definiert, als Katalysator zur Herstellung von Polyurethan durch Reaktion eines organischen Polyisocyanats mit einer organischen Verbindung, die mindestens zwei Gruppen mit aktivem Wasserstoff enthält, und Auslösung der Katalyse der Reaktion durch Erhitzen des Reaktionsgemisches auf eine Temperatur mindestens gleich der Zersetzungstemperatur dieser Verbindung.

7. Verwendung einer Verbindung, wie in einem der Ansprüche 1 bis 3 definiert, als Vernetzungskatalysator eines Gemisches eines Polydiorganosiloxans A mit Silanolenden und eines Polyorganohydrogenosiloxans B, indem das Gemisch, das eine wirksame Menge dieser Verbindung enthält, auf eine Temperatur gleich oder über der thermischen Zersetzung dieser Verbindung mit eventueller Verdampfung des in dem Gemisch vorhandenen Lösungsmittels oder Wassers gebracht wird.
